# EUROPÄISCHE PATENTSCHRIFT

(11) **EP 0 806 887 B1**
(45) Veröffentlichungstag und Bekanntmachung des Hinweises auf die Patenterteilung: **19.05.2004**
(21) Anmeldenummer: 97104241.1
(22) Anmeldetag: 13.03.1997
(51) Int. Cl.: H05B 1/02, F24C 7/08, H05B 3/74

(54) **Verfahren und Vorrichtung zum Erkennen des Kochpunktes von Kochgut**
Method and device for recognizing the stage of cooking of cooked food
Procédé et dispositif pour reconnaître le stade de cuisson d'aliments à cuire

(30) Priorität: 11.05.1996 DE 19619141; 22.11.1996 DE 19648397
(43) Veröffentlichungstag der Anmeldung: 12.11.1997
(73) Patentinhaber: AEG Hausgeräte GmbH, 90429 Nürnberg (DE)
(72) Erfinder: Luther,Jürgen,Dipl.-Ing., 64289 Darmstadt (DE); Leikam, Jürgen, Dipl.-Ing., 91161 Hilpoltstein (DE)

(56) Entgegenhaltungen:
- EP-A- 0 652 688
- DE-A- 3 314 398
- DE-A- 3 323 399
- DE-A- 3 642 180
- DE-A- 4 007 680
- DE-A- 4 413 979
- DE-C- 3 447 296
- DE-C- 3 642 181
- US-A- 4 682 013
- US-A- 5 410 129

## Beschreibung

Die Erfindung betrifft ein Verfahren sowie eine Vorrichtung zum Erkennen des Kochpunktes von Kochgut.

Bei herkömmlichen Glaskeramikkochmulden wird ein auf einem Kochfeld befindlicher Behälter mittels Heizwendeln durch die Glaskeramik hindurch beheizt, so daß nach Güte des Behälters bzw. des Kontaktes und der Wärmeleitung zwischen Behälter und Boden und Glaskeramik die Temperatur der Glaskeramik über der des Behälters und entsprechend der des in dem Behälter befindlichen Kochgutes liegt.

Wenn die Heizenergie mittels eines Hochfrequenzfeldes durch eine Glaskeramik hindurch induktiv in den metallischen Behälterboden eingebracht wird und dieser durch die Ohm'schen Verluste der Wirbelströme beheizt wird, ist der Behälterboden wärmer als Temperaturfühler, die an der Glaskeramik auf der vom Behälterboden abgewandten Seite angebracht sind. Bisher für die Automatisierung von Garvorgängen eingesetzte Temperaturauswertungen können daher bei Induktionsbeheizung nicht ohne weiteres verwendet werden.

Besonders wichtig für jede Automatisierung des Koch- bzw. Garvorgangs ist eine sichere Erkennung des Kochpunktes des in einem Behälter befindlichen Kochguts.

Entsprechend liegt der Erfindung die Aufgabe zugrunde, ein Verfahren und eine Vorrichtung anzugeben, mit dem bzw. mit der der Kochpunkt von Kochgut in einem auf einem Kochfeld aufgestellten Behälter erkannt werden kann. Das Verfahren und die Vorrichtung sollen insbesondere bei einer Induktionsbeheizung des Behälter zur Kochpunkterkennung geeignet sein.

Der das Verfahren betreffende Teil der Erfindungsaufgabe wird mit den Merkmalen des Anspruchs 1 gelöst. Bei diesem Verfahren wird zum Erkennen des Kochpunktes von Kochgut in einem auf einem Kochfeld aufgestellten Behälter der zeitliche Verlauf der Temperatur wenigstens eines, dem Kochfeld zugeordneten Temperaturfühlers verfolgt, und als Kochpunkt wird ein Wendepunkt in diesem Temperaturverlauf erkannt.

Der auf die Vorrichtung gerichtete Teil der Erfindungsaufgabe wird mit den Merkmalen des Anspruchs 9 gelöst. Die Vorrichtung zum Erkennen des Kochpunktes von Kochgut in einem Behälter umfaßt ein Kochfeld zum Aufstellen des Behälters, eine Heizeinrichtung zum Erhitzen des Behälters, wenigstens einen dem Kochfeld zugeordneten Temperaturfühler und Auswertemittel zum Verfolgen des zeitlichen Verlaufs der Temperatur des Temperaturfühlers und Erkennen eines Wendepunktes in diesem Temperaturverlauf als Kochpunkt.

Unter Kochfeld wird dabei eine einzelne Kochstelle oder auch ein Kochfeld mit mehreren Kochstellen verstanden.

Das Verfahren gemäß Anspruch 1 wird mit den Merkmalen der vom Anspruch 1 abhängigen Ansprüche 2 bis 8 jeweils in vorteilhafter Weise weitergebildet.

Die von Anspruch 9 abhängigen Ansprüche 10 bis 19 sind auf vorteilhafte Weiterbildungen der Vorrichtung gemäß dem. Anspruch 9 gerichtet.

Als Kochpunkt werden demnach vorzugsweise nur solche Wendepunkte erkannt, bei denen die zeitliche Änderung der Temperatur des Temperaturfühlers ein Maximum annimmt.

Der wenigstens eine Temperaturfühler ist in einer vorteilhaften Ausführungsform im mittleren Bereich des Kochfeldes angeordnet.

In einer besonders vorteilhaften Ausführungsform wird als Kochpunkt zusätzlich auch ein Punkt erkannt, bei dem die zeitliche Änderung der Temperatur wenigstens eines weiteren, dem Kochfeld zugeordneten Temperaturfühlers einen vorbestimmten Wert unterschreitet. Mit dieser zusätzlichen Auswertung eines weiteren Temperaturfühlers kann eine zuverlässige Kochpunkterkennung auch bei unterschiedlichen Füllungsgraden des Behälters erreicht werden. Der wenigstens eine weitere Temperaturfühler ist vorzugsweise im Außenbereich des Kochfeldes angeordnet.

In einer weiteren Ausführungsform wird die dem Behälter zugeführte Heizleistung in Abhängigkeit vom Temperaturverlauf wenigstens eines der Temperaturfühler gesteuert. Vorzugsweise wird die Heizleistung nach Erkennen eines Kochpunktes vermindert, da zum Aufrechterhalten'des Kochvorganges eine geringere Energie benötigt wird als beim Aufheizen.

Die Vorrichtung enthält in einer vorteilhaften Ausführungsform wenigstens drei weitere Temperaturfühler, die in einem Außenbereich des Kochfeldes angeordnet sind. Die Auswertemittel überwachen dann die zeitliche Änderung des Mittelwertes der Temperaturen der wenigstens drei Temperaturfühler bezüglich der Unterschreitung des vorbestimmten Schwellwertes. Die wenigstens drei Temperaturfühler sind vorzugsweise in gleichen winkligen Abständen zueinander angeordnet.

Die Vorrichtung kann auch eine Anzeigeeinrichtung aufweisen, die bei einem oberhalb eines vorbestimmten Wertes liegenden Temperaturunterschied zwischen dem im mittleren Bereich des Kochfeldes angeordneten Temperaturfühler und wenigstens einem der im Außenbereich des Kochfeldes angeordneten Temperaturfühler aktiviert wird. Damit können Kochbehälter mit schlechten Böden erkannt werden oder auch eine unsymmetrische Aufstellung eines Kochbehälters auf dem Kochfeld.

Die Erfindung wird im folgenden anhand schematischer Zeichnungen beispielsweise und mit weiteren Einzelheiten erläutert.

Es stellen dar:
- Fig. 1: ein Blockschaltbild einer erfindungsgemäßen Vorrichtung,
- Fig. 2: Meßkurven bei mit geringer Menge von Kochgut gefülltem Behälter und
- Fig. 3: Meßkurven von mit viel Kochgut gefülltem Behälter.

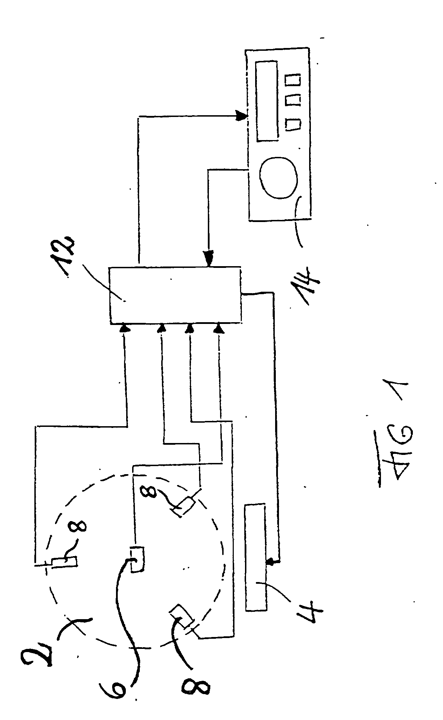

Gemäß Fig. 1 befindet sich unterhalb eines schematisch in einer Draufsicht dargestellten Kochfeldes 2 einer Glaskeramikmulde eine induktiv arbeitende Heizeinrichtung 4.

Mit einer solchen Hochfrequenzheizeinrichtung wird abgestrahlte elektromagnetische Energie im metallischen Boden eines auf dem Kochfeld 2 befindlichen, nicht dargestellten Behälters in Wirbelströme umgewandelt, die aufgrund der Ohm'schen Verluste den Behälterboden unmittelbar aufheizen. An der Unterseite der Glaskeramik sind im Bereich des Kochfeldes 2 mehrere Temperaturfühler angebracht, und zwar ein Temperaturfühler 6 im Zentrum des Kochfeldes 2 und drei Temperaturfühler 8 am Umfang.des Kochfeldes 2 in gleichmäßigen winkligen Abständen. Die Temperaturfühler sind vorzugsweise Leiterbahnen aus einem Material mit hoher Temperaturabhängigkeit des Widerstandes, beispielsweise aus Gold (Au) oder Platin (Pt). Solche Widerstandstemperaturfühler mit Leiterbahnen sind beispielsweise in DE-A-43 36 752 beschrieben.

Das Kochfeld 2 gemäß FIG 1 ist vorzugsweise nur eine Kochstelle für einen Behälter. Es kann natürlich auch ein Kochfeld 2 mit mehreren, vorzugsweise vier solcher Kochstellen vorgesehen sein. Es sind dann vorzugsweise jeder Kochstelle jeweils eine Temperaturfühleranordnung zugeordnet.

Die Temperaturfühler 8 sowie der Temperaturfühler 6 sind an Eingänge der Steuereinrichtung 12 angeschlossen.

Die Steuereinrichtung 12 enthält einen Mikroprozessor mit Arbeitsspeicher und Programmspeicher und ist bezüglich ihrer Hardwarekonfiguration sowie der Betriebssoftware, wie allgemein bekannt, aufgebaut.

Die Steuereinrichtung 12 ist mit einer Bedien- und Anzeigeeinheit 14 sowie der Heizeinrichtung 4 verbunden.

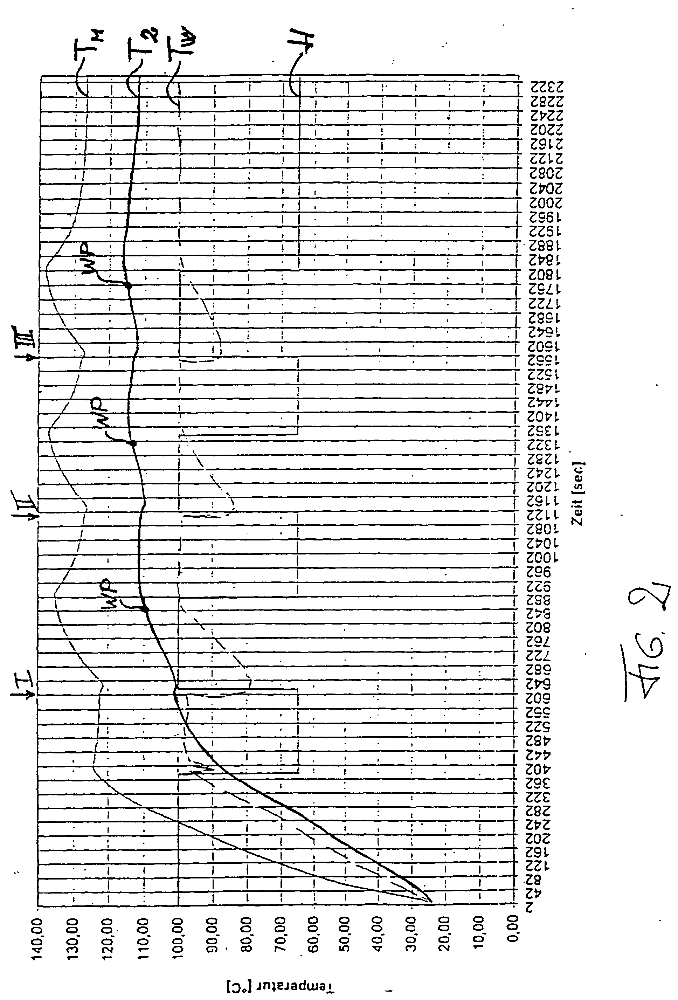

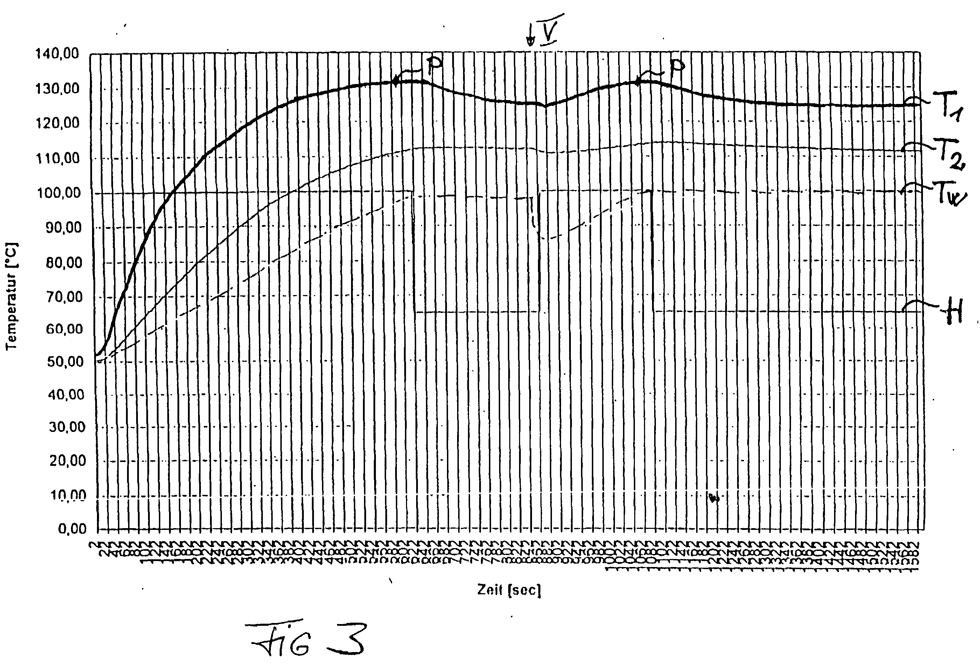

Das in der Steuereinrichtung 12 abgelegte Programm wird im folgenden anhand der Fig. 2 und 3 beschrieben, in denen darstellen:
Die oberste Kurve den zeitlichen Verlauf des Mittelwertes T_{M} der Temperaturen der drei in Fig. 1 dargestellten Temperaturfühler 8 (Fig. 2) oder der Temperatur T₁ eines der drei Temperaturfühler (Fig. 3),
die zweitoberste Kurve den zeitlichen Verlauf der Temperatur T₂ des Temperaturfühlers 6,
die gestrichelte Kurve den zeitlichen Verlauf der Temperatur T_{W} von Kochgut, das sich in dem auf das Kochfeld 2 gestellten Behälter befindet und
die unterste Kurve den zeitlichen Verlauf der von der Heizeinrichtung 4 abgegebenen Heizleistung H.

Fig. 2 stellt einen Versuchsverlauf dar, bei dem ein Behälter mit einer verhältnismäßig geringen Menge an Kochgut gefüllt ist. Die Fig. 3 stellt die Kurven für einen Versuch dar, bei dem der Behälter annähernd voll mit Kochgut ist.

Gemäß Fig. 2 wird der Behälter zunächst mit einer konstant hohen Heizleistung beheizt, woraufhin die Temperaturen der Temperaturfühler 6 und 8 stark ansteigen. Wie ersichtlich, steigt die mittlere Temperatur T_{M} der drei peripheren Temperaturfühler 8, die in der Steuereinrichtung 12 als Mittelwert der drei Einzeltemperaturen der Temperaturfühler 8 ermittelt wird, erheblich stärker an als die Temperatur des mittleren Temperaturfühlers 6. Der Grund dafür liegt darin, daß sich der Behälterboden normalerweise etwas aufwölbt, so daß im mittleren Bereich ein Spalt zwischen dem Behälterboden und der Glaskeramik besteht, die den Wärmeübergang erheblich verschlechtert. Dazu kann der Effekt treten, daß der periphere Bereich des Behälters wegen des dort vorhandenen Übergangs in dessen Seitenwände stärker aufgeheizt wird als der mittlere Bereich.

Wie aus Fig. 2 weiter ersichtlich, bleibt die Temperatur T₂ des Temperaturfühlers 6 zunächst unter der Temperatur T_{W} des Kochgutes, im Fallbeispiel Wasser. Wenn das Wasser seinen Kochpunkt erreicht, nimmt die zeitliche Erwärmung des Temperaturfühlers 6 nicht mehr zu, sondern ab, d. h. die dargestellte Kurve T₂ hat einen ersten Wendepunkt WP; ihre erste zeitliche Ableitung durchläuft ein Maximum und ihre zweite zeitliche Ableitung hat einen Nullpunkt. Eine in der Steuereinrichtung 12 enthaltene Auswerteschaltung (getaktetes Auslesen der Temperaturen und Feststellung, ob die Differenz zweier hintereinander ausgelesener Temperaturwerte zu-oder abnimmt) stellt das Vorhandensein des Wendepunktes WP der Kurve T₂ fest und wertet dies als Kochbeginn, woraufhin die Heizleistung H beispielsweise entsprechend einer an der Bedien- und Anzeigeeinheit 14 eingestellten oder gewählten Garintensität zurückgenommen wird. Wenn nun zu einem Zeitpunkt I (Pfeil oben in Fig. 2) zusätzliches Kochgut in den Behälter gegeben wird, sinkt die Temperatur T_{W} plötzlich ab. Dies führt zu einem Absinken insbesondere der Temperatur T_{M}, woraufhin die Heizleistung von der Steuereinrichtung 12 wiederum auf den alten hohen, konstanten Wert angehoben wird und sich, ausgehend von einem erheblich höheren Niveau prinzipiell ähnliche Temperaturkurvenverläufe ergeben wie beim Beginn des Erhitzens des Kochgutes. Wiederum durchläuft die Kurve T₂, die inzwischen über der Kurve T_{W} liegt, einen Wendepunkt WP, der als erneuter Kochbeginn gewertet wird. Der Vorgang läßt sich für weitere erneute Ankochvorgänge nach Zuschütten von weiteren Kochgut (Pfeile II und III) wiederholen.

Fig. 3 zeigt einen Versuch für den Fall, daß der Behälter weitgehend mit Kochgut (wiederum Wasser) gefüllt ist.

Wie ersichtlich, erfolgt die Erwärmung des Wassers (T_{W}) dann erheblich langsamer, wobei die Kurve T₂ hier im wesentlichen von Anfang an über der Kurve T_{W} liegt. In diesem Fall durchläuft die Kurve T₂ keinen Wendepunkt, so daß dieses Kriterium nicht für die Feststellung des Kochpunktes herangezogen werden kann. Als Kochpunkt wird in diesem Fall derjenige Zeitpunkt P herangezogen, zu dem die zeitliche Änderung der Temperatur T₁ des Temperaturfühlers 8 mit der höchsten Temperatur einen vorbestimmten, mit Vorteil entsprechend der Gärungsintensität einstellbaren Wert unterschreitet. Das gleiche Verfahren läßt sich anwenden, wenn nach Zugabe von Wasser (Pfeil V) ein erneutes Ankochen erfolgen soll.

Wie aus den Figuren ersichtlich, wird als Kochpunkt entweder der Zeitpunkt gewertet, bei dem der Temperaturverlauf des im allgemeinen relativ kältesten Temperaturfühlers einen Wendepunkt hat oder der Zeitpunkt im Temperaturverlauf, zu dem die zeitliche Änderung vorteilhafterweise des wärmsten Temperaturfühlers einen voreingestellten Schwellwert unterschreitet, je nach dem, welches Kriterium als erstes erfüllt ist. Anstelle der Temperatur des wärmsten der äußeren Temperatursensoren 8 kann auch deren Mittelwert zur Anzeige des Kochpunktes herangezogen werden, wenn die drei Temperaturen nicht zu stark voneinander abweichen.

Die Anordnung der Temperaturfühler 2 und 8 gemäß Fig. 1 kann für weitere Aussagen benutzt werden. Wenn beispielsweise die Temperaturen der peripher angeordneten Temperaturfühler 8 voneinander verschieden sind, deutet dies darauf, daß der Behälter unsymmetrisch auf dem Kochfeld 2 steht oder keinen planaren Behälterboden aufweist und kann über eine entsprechende Anzeige der Bedien-und Anzeigeeinheit 14 akustisch und/oder optisch angezeigt werden. Wenn die Temperatur des mittleren Temperaturfühlers 6 über ein vorbestimmtes Maß von der der äußeren Temperaturfühler 8 abweicht, kann dies als Anzeichen für schlechte Behälterqualität genommen werden und ebenfalls angezeigt werden. Ferner kann in Abhängigkeit von der Temperaturabweichung die Fortkochheizleistung angepaßt werden, um eine schlechte Kochtopfqualität auszugleichen.

Wenn der Kochpunkt dadurch ermittelt wird, daß die Temperaturkurve des im allgemeinen jeweils kältesten Temperaturfühlers auf einen Wendepunkt hin und die Temperaturkurve des im allgemeinen jeweils heißesten Temperaturfühlers auf das Unterschreiten eines vorbestimmten Schwellwertes durch deren zeitliche Änderung ausgewertet werden, ist auch bei unsymmetrisch auf dem Kochfeld 2 stehendem Behälter eine einigermaßen sichere Feststellung ihres Kochpunktes möglich.

Es sind mannigfache Abwandlungen des Verfahrens und der Vorrichtung gemäß der Erfindung möglich. Beispielsweise kann auch mit lediglich einem peripheren Temperaturfühler 8 oder mit noch mehreren gearbeitet werden. Das Kochfeld muß nicht aus Glaskeramik bestehen, sondern kann auch aus einem anderen Material bestehen, vorzugsweise einem Material, dessen Wärmeleitvermögen und Wärmekapazität vergleichsweise klein sind.

Ferner kann auch eine auf einem anderen Heizprinzip beruhende Heizeinrichtung 4 vorgesehen sein, beispielsweise eine Strahlungsheizung oder eine Widerstandsheizung. Insbesondere kann die Heizeinrichtung mit elektrischen Widerstandsstrukturen gebildet sein, die an der Unterseite einer als Kochfeld vorgesehenen Keramik angeordnet sind, beispielsweise einer Siliciumnitrid- oder einer Siliciumcarbidkeramik.

## Patentansprüche

1. Verfahren zum Erkennen des Kochpunktes von Kochgut in einem auf einem Kochfeld (2) aufgestellten Behälter mit Hilfe von wenigstens einem dem Kochfeld (2) zugeordneten Temperaturfühler (6), bei dem der zeitliche Verlauf der Temperatur (T₂) des wenigstens einen Temperaturfühlers (6) verfolgt wird und als Kochpunkt ein Wendepunkt (WP) in diesem Temperaturverlauf (T₂) erkannt wird, und bei dem als Kochpunkt nur ein Wendepunkt (WP) erkannt wird, bei dem die zeitliche Änderung der Temperatur (T₂) ein Maximum annimmt.

2. Verfahren nach Anspruch 1 , bei dem der Temperaturfühler (6) im mittleren Bereich des Kochfeldes (2) angeordnet ist.

3. Verfahren nach einem der vorhergehenden Ansprüche, bei dem als Kochpunkt auch ein Punkt (P) erkannt wird, bei dem die zeitliche Änderung der Temperatur (T₁) wenigstens eines weiteren, dem Kochfeld (2) zugeordneten Temperaturfühlers (8) einen vorbestimmten Wert unterschreitet.

4. Verfahren nach Anspruch 3, bei dem der wenigstens eine weitere Temperaturfühler (8) im Außenbereich des Kochfeldes angeordnet ist.

5. Verfahren nach einem der vorhergehenden Ansprüche, bei dem eine dem Behälter zugeführte Heizleistung (H) in Abhängigkeit vom Temperaturverlauf wenigstens eines der Temperaturfühler (6) gesteuert wird.

6. Verfahren nach Anspruch 5, bei dem die Heizleistung (H) nach Erkennen eines Kochpunktes (WP, P) vermindert wird.

7. Verfahren nach einem der vorhergehenden Ansprüche, bei dem der Behälter induktiv erwärmt wird.

8. Vorrichtung zum Erkennen des Kochpunktes von Kochgut in einem Behälter mit
a) einem Kochfeld (2) zum Aufstellen des Behälters,
b) einer Heizeinrichtung (4) zum Erhitzen des Behälters,
c) wenigstens einem dem Kochfeld (2) zugeordneten Temperaturfühler (6) und
d) Auswertemitteln (12) zum Verfolgen des zeitlichen Verlaufs der Temperatur (T₂) des Temperaturfühlers (6) und Erkennen eines Wendepunktes (WP) in diesem Temperaturverlauf als Kochpunkt, und bei der die Auswertemittel (12) als Kochpunkt nur einen Wendepunkt (WP) erkennen, bei dem die zeitliche Ableitung der Temperatur (T₂) des Temperaturfühlers (6) ein Maximum annimmt.

9. Vorrichtung nach Anspruch 8, bei der der Temperaturfühler (6) in einem mittleren Bereich des Kochfeldes (2) angeordnet ist.

10. Vorrichtung nach einem der Ansprüche 8 bis 9, bei der
a) dem Kochfeld (2) wenigstens ein weiterer Temperaturfühler (8) zugeordnet ist
und
b) die Auswertemittel (12) auch den zeitlichen Verlauf der Temperatur (T₂) des weiteren Temperaturfühlers (8) verfolgen und als einen Kochpunkt einen Punkt (P) erkennen, bei dem die zeitliche Änderung der Temperatur (T₂) des weiteren Temperaturfühlers (8) einen vorgegebenen Schwellwert unterschreitet.

11. Vorrichtung nach Anspruch 10, bei der wenigstens eine weitere Temperaturfühler (8) in einem äußeren Bereich des Kochfeldes (2) angeordnet ist.

12. Vorrichtung nach Anspruch 10, bei der der in einem Außenbereich des Kochfeldes (2) wenigstens drei weitere Temperaturfühler (8) angeordnet sind, und daß die Auswertemittel (12) die zeitliche Änderung des Mittelwertes (T_{M}) der Temperaturen der wenigstens drei Temperaturfühler bezüglich der Unterschreitung des vorbestimmten Schwellwertes überwachen.

13. Vorrichtung nach Anspruch 12, bei der die wenigstens drei Temperaturfühler (9) in gleichen winkligen Abständen zueinander angeordnet sind.

14. Vorrichtung nach Anspruch 9 und einem der Ansprüche 11 bis 13 mit einer Anzeigeeinrichtung (14), die bei einem oberhalb eines vorbestimmten Wertes liegenden Temperaturunterschied zwischen dem im mittleren Bereich des Kochfeldes (2) angeordneten Temperaturfühler (6) und wenigstens einem der im Außenbereich des Kochfeldes (2) angeordneten Temperaturfühler (8) aktiviert wird.

15. Vorrichtung nach einem der Ansprüche 8 bis 14 mit einer Steuereinrichtung (12) zum Steuern der Heizeinrichtung (4) in Abhängigkeit vom Temperaturverlauf wenigstens eines der Temperaturfühler (6, 8).

16. Vorrichtung nach Anspruch 15, bei der die Steuereinrichtung (12) die Heizleistung (H) der Heizeinrichtung (4) nach Erkennen des Kochpunktes vermindert.

17. Vorrichtung nach einem der Ansprüche 8 bis 16, bei der die Heizeinrichtung (4) eine Induktionsheizeinrichtung ist.

## Claims

1. Method of detecting the boiling point of liquid being cooked in a container placed on a hot-plate (2) by means of at least one temperature sensor (6) allocated to the hot-plate (2), wherein the time curve of the temperature (t2) of the at least one temperature sensor (6) is plotted and a turning point (WP) in this temperature curve (T₂) is detected as the boiling point, and wherein as the boiling point only one turning point (WP) is detected, at which the change in temperature (T₂) against time reaches a maximum.

2. Method according to claim 1, wherein the temperature sensor (6) is disposed in the central region of the hob (2).

3. Method according to one of the preceding claims, wherein as the boiling point a point (P) is also detected, at which the change in temperature (T₁) against time of at least one further temperature sensor (8) allocated to the hob (2) falls below a specified value.

4. Method according to claim 3, wherein the at least one further temperature sensor (8) is disposed in the outer region of the hob.

5. Method according to one of the preceding claims, wherein the heating power (H) supplied to the container is controlled as a function of the temperature curve of at least one of the temperature sensors (6).

6. Method according to claim 5, wherein the heating power (H) is reduced after detection of a boiling point (WP, P).

7. Method according to one of the preceding claims, wherein the container is heated inductively.

8. Device for detecting the boiling point of liquid in a container comprising
a) a hob (2) for the container to stand on,
b) a heating device (4) for heating the container,
c) at least one temperature sensor (6) allocated to the hob (2), and
d) evaluating means (12) for plotting the curve of the temperature (T₂) of the temperature sensor (6) against time and detecting a turning point (WP) in this temperature curve as a boiling point, and
wherein the evaluating means (12) detect as a boiling point only one turning point (WP) at which the time derivative of the temperature (T2) of the temperature sensor (6) reaches a maximum.

9. Device according to claim 8, wherein the temperature sensor (6) is disposed in a central region of the hob (2).

10. Device according to either of claims 8 or 9, wherein
a) a further temperature sensor (8) is allocated to the hob (2) and
b) the evaluating means (12) also plot the time curve of the temperature (T₂) of the further temperature sensor (8) and detect as a boiling point a point (P) at which the change of temperature (T₂) against time of the further temperature sensor (8) falls below a specified threshold value.

11. Device according to claim 10, wherein at least one further temperature sensor (8) is disposed in an outer region of the hob (2).

12. Device according to claim 10, wherein at least three further temperature sensors (8) are disposed in an outer region of the hob (2), and wherein the evaluating means (12) monitor the change of the average value (TM) of the temperatures of the at least three temperature sensors against time in terms of the shortfall from the specified threshold value.

13. Device according to claim 12, wherein the at least three temperature sensors (9) are arranged at equal angular distances from one another.

14. Device according to claim 9 and one of claims 11 to 13, having a display (14), which is activated if a temperature difference between the temperature sensor (6) disposed in the central region of the hob (2) and at least one of the temperature sensors (8) disposed in the outer region of the hob (2) lies above a specified value.

15. Device according to one of claims 8 to 14, having a control device (12) for controlling the heating device (4) as a function of the temperature curve of at least one of the temperature sensors (6, 8).

16. Device according to claim 15, wherein the control device (12) reduces the heating power (H) of the heating device (4) after the boiling point has been detected.

17. Device according to one of claims 8 to 16, wherein the heating device (4) is an induction heating device.

## Revendications

1. Procédé de détection du point de cuisson d'aliments à cuire dans un récipient placé sur une plaque de cuisson (2) à l'aide d'au moins un capteur de température (6) associé à la plaque de cuisson (2), dans lequel on suit la courbe dans le temps de la température (T₂) d'au moins un capteur de température (6) et, comme point de cuisson, un point de changement (WP) est détecté dans cette courbe de température (T₂) et dans lequel est détecté comme point de cuisson seulement un point de changement (WP) où la modification temporaire de la température (T₂) atteint un maximum.

2. Procédé selon la revendication 1, dans lequel le capteur de température (6) est disposé dans la zone médiane de la plaque de cuisson (2).

3. Procédé selon l'une des revendications précédentes, dans lequel est détecté comme point de cuisson également un point (P) auquel la modification temporaire de la température (T₁) d'au moins un autre capteur de température (8) associé à la plaque de cuisson (2) passe sous une valeur prédéterminée.

4. Procédé selon la revendication 3, dans lequel au moins un capteur de température supplémentaire précité (8) est disposé dans la zone extérieure de la plaque de cuisson.

5. Procédé selon l'une des revendications précédentes, dans lequel une puissance de chauffe (H) amenée au récipient est commandée en fonction de la courbe de température d'au moins un des capteurs de température (6).

6. Procédé selon la revendication 5, où la puissance de chauffe (H) est diminuée après la détection d'un point de cuisson (WP, P).

7. Procédé selon l'une des revendications précédentes, dans lequel le récipient est chauffé par induction.

8. Dispositif pour la détection du point de cuisson d'aliments à cuire dans un récipient avec
a) une plaque de cuisson (2) pour poser le récipient,
b) une installation de chauffage (4) pour chauffer le récipient,
c) au moins un capteur de température (6) associé à la plaque de cuisson (2) et
d) des moyens d'évaluation (12) pour suivre la courbe temporaire de la température (T₂) du capteur de température (6) et pour détecter un point de changement (WP) dans cette courbe de température comme point de cuisson, et où les moyens d'évaluation (12) détectent comme point de cuisson seulement un point de changement (WP) où la dérivée temporaire de la température (T₂) du capteur de température (6) est au maximum.

9. Dispositif selon la revendication 8, dans lequel le capteur de température (6) est disposé dans une zone médiane de la plaque de cuisson (2).

10. Dispositif selon l'une des revendications 8 à 9, dans lequel
a) il est associé à la plaque de cuisson (2) au moins un autre capteur de température (8), et
b) les moyens d'évaluation (12) suivent également la courbe temporaire de la température (T₂) de l'autre capteur de température (8) et détectent comme point de cuisson un point (P) où la modification temporaire de la température (T₂) de l'autre capteur de température (8) passe sous une valeur de seuil prédéterminée.

11. Dispositif selon la revendication 10, dans lequel au moins un autre capteur de température précité (8) est disposé dans une zone extérieure de la plaque de cuisson (2).

12. Dispositif selon la revendication 10, dans lequel sont disposés dans une zone extérieure de la plaque de cuisson (2) au moins trois autres capteurs de température (8), et en ce que les moyens d'évaluation (12) surveillent la modification temporaire de la valeur moyenne (T_{M}) des températures d'au moins trois capteurs de température précités quant au passage sous la valeur de seuil prédéterminée.

13. Dispositif selon la revendication 12, dans lequel au moins trois capteurs de température précités (8) sont disposés à des écarts angulaires égaux les uns relativement aux autres.

14. Dispositif selon la revendication 9 et l'une des revendications 11 à 13 avec une installation d'affichage (14), qui est activée dans le cas d'une différence de température au-dessus d'une valeur prédéterminée entre le capteur de température (6) disposé dans la zone médiane de la plaque de cuisson (2) et au moins l'un des capteurs de température (8) disposés dans la zone extérieure de la plaque de cuisson (2).

15. Dispositif selon l'une des revendications 8 à 14 avec une installation de commande (12) pour commander l'installation de chauffage (4) en fonction de l'allure de la température d'au moins l'un des capteurs de température (6, 8).

16. Dispositif selon la revendication 15, dans lequel l'installation de commande (12) réduit la puissance de chauffe (H) de l'installation de chauffage (4) après la détection du point de cuisson.

17. Dispositif selon l'une des revendications 8 à 16, dans lequel l'installation de chauffage (4) est une installation de chauffage à induction.
